# EUROPÄISCHE PATENTSCHRIFT

(11) **EP 0 583 857 B1**
(45) Veröffentlichungstag und Bekanntmachung des Hinweises auf die Patenterteilung: **08.04.1998**
(21) Anmeldenummer: 93250203.2
(22) Anmeldetag: 12.07.1993
(51) Int. Cl.: B29C 45/57

(54) **Verfahren und Vorrichtung zum Nachdrücken von Spritzgiessmassen**
Method and apparatus for exerting a packing pressure on injection moulding materials
Procédé et dispositif de maintien de pression pour des matières d'injection

(30) Priorität: 17.07.1992 DE 4224196
(43) Veröffentlichungstag der Anmeldung: 23.02.1994
(73) Patentinhaber: MANNESMANN Aktiengesellschaft, 40213 Düsseldorf (DE)
(72) Erfinder: Gläser, Arnaldo, Dipl.-Ing., D-91233 Neunkirchen (DE); Schimmel, Dieter, D-91154 Roth (DE)
(74) Vertreter: Meissner, Peter E., Dipl.-Ing.

(56) Entgegenhaltungen:
- EP-A- 0 273 769
- EP-A- 0 482 743
- DE-A- 2 061 267
- DE-A- 2 614 213

## Beschreibung

Die Erfindung betrifft ein verfahren zum Nachdrücken von Spritzgießmassen, insbesondere von PET-Massen, in einer eine Spritzgießform mit einer Kavität und eine mit dieser über einen Zufuhrkanal verbundene Schnecke aufweisenden Spritzgießmaschine, die eine mit einem Kolben und einer diesen Kolben umhüllenden Hülse versehene Schiebereinheit zur Erzeugung eines Nachdruckes aufweist, sowie die Vorrichtung dazu.

Nach dem Füllen der Spritzgießform mit thermoplastischem Material tritt infolge der Abkühlung des Materials eine Formteilschrumpfung auf. Dies führt zu ungleichmäßigen Wanddicken sowie Veränderungen der Materialstruktur, bedingt durch die unterschiedlichen Temperaturen im Formteil. Zur Minderung der Auswirkungen der Volumenschwindung wird Kunststoffmaterial zur Spritzgießform nachgefördert und gleichzeitig ein Nachdruck auf das Material ausgeübt.

Aus der EP-A-0 482 743 ist ein Verfahren zum Nachdrücken von Spritzgießmassen gemäß dem Oberbegriff des Patentanspruchs 1 bekannt. Die hierbei zur Anwendung kommende Vorrichtung weist einen verschiebbaren Kolben auf, der von einer ringförmigen Hülse umgeben ist. Diese Hülse ist ebenfalls verschiebbar. Die Verschiebung von Kolben und Hülse erfolgt allerdings gemeinsam.

Aus der DE-OS 33 07 586 ist es bekannt, beim Ausformen von Kunststoff-Formteilen Material in einer in der Nähe des Zylinders angeordneten Speichereinheit zu sammeln, die Verbindung zwischen Schnecke und Formraum zu unterbrechen und gespeichertes Material mittels eines gesonderten Antriebs nachzudrücken.

Nachteil dieser Anordnung zum Spritzgießen von Kunststoffteilen ist das Abtrennen des Materialstroms vom Hauptförderstrom und das Nachfördern des in einem Speicher gesammelten Materials. Das Bevorraten einer Kunststoffmasse in einem gesonderten Speicherraum hat folgenden Nachteil: Dieses Material wird beiden verschiedenen Spritzgießzyklen andere Eigenschaften aufweisen als das Hauptmaterial. Da das im Speicher befindliche Material nicht bei jedem Schuß vollständig ausgetauscht wird, kann das stagnierende Material einem thermischen Abbau der molekularen Struktur ausgesetzt sein.

Aus der DE-OS 35 16 179 ist ein Verfahren und eine Vorrichtung zum Herstellen von Gegenständen aus thermoplastischen Kunststoffen durch Spritzgießen bekannt, indem zwischen der Schnecke und der Spritzgießform ein zweiter Speicherraum vorgesehen ist, der durch ein Absperrelement verschließbar ist und dem ein Ringkolben zugeordnet ist, mit dem bei Bewegung der gesamten Schneckeneinheit thermoplastisches Material in die Kavität nachgedrückt werden kann.

Nachteil dieser Anordnung ist das Erfordernis der Bewegung der gesamten Schnecke. Hinzu tritt, daß durch das Verfahren solch großer Einheiten ein genaues Dosieren kaum möglich ist.

Die Erfindung hat sich das Ziel gesetzt, ein Verfahren einschließlich der dazu gehörenden Vorrichtung zu schaffen, bei dem die o.g. Nachteile vermieden werden und mit einfachen Mitteln ein feinfühliges Nachdrücken von homogenem Spritzgießmaterial in eine Spritzgießform gewährleistet ist.

Die Erfindung löst die Aufgabe durch die Merkmale des Verfahrensanspruchs 1 und des Vorrichtungsanspruchs 2.

Erfindungsgemäß wird die Spritzgießmasse von der Schnecke zur Kavität über einen Zufuhrkanal geleitet, der keinerlei Toträume aufweist. Dabei ist der Zufuhrkanal so gestaltet, daß mittels einer baulich einfachen und, bezogen auf die Abmessungen, kleinen Schiebereinheit, der Massestrom abgesperrt und feinfühlig bewegt werden kann.

Durch die Zweiteiligkeit der Schiebereinrichtung wird der zusammenhängende Massestrom mittels des messerförmigen, ggf. hülsenförmigen Teils scharf abgeschnitten. Während des Nachdrückens durch den kolbenförmigen Teil wird der messerförmige Teil zum Absperren des Kunststoffvolumens schneckenwärts verwendet. Nach Öffnen des als Absperrung verwendeten Schieberteils wird alles in der Vorrichtung befindliche Material weitergefördert, ohne daß es zu Materialstagnationen kommen kann. Der Kavität wird ausschließlich originäres Material zugeführt.

Die Schiebereinheit weist dabei für beide Teile unabhängig betätigbare Antriebseinheiten auf. Hierdurch wird eine äußerst feinfühlige Steuerung der Nachfüllmenge sowie des Druckes möglich.

Der Zufuhrkanal ist Teil eines Nachdruckbausteines, der sich in einfacher Weise zwischen der Schneckendüse und der Spritzgießform einbauen läßt. Der Zufuhrkanal ist so gestaltet, daß das Spritzgießmaterial ohne nennenswerte Behinderungen strömen kann. Der Nachdruckbaustein ist beheizt und mit einer Temperaturregelung ausgestattet. Wegen der Kürze der Fließstrecke ergeben sich nur geringe thermische Belastungen der Schmelze.

Der Nachdruckbaustein ist werkzeugseitig mit einem Heißkanalverteiler verbindbar.

Hierdurch besteht die Möglichkeit, neben der Einflußnahme auf Druck und Volumen auch noch auf die Temperatur des Spritzgießmaterials einzuwirken.

Ein Beispiel der Erfindung ist in der Zeichnung dargestellt. Die Fig. 1 bis 4 zeigen jeweils einen Nachdruckbaustein, u.z.:
- Fig. 1: in der Spritzgießphase
- Fig. 2: die Phase des Absperrens des schneckenseitigen Kanals
- Fig. 3: die Nachdrückphase
- Fig. 4: Öffnen des Sperrschiebers für vollständiges Freispülen im nächsten Zyklus

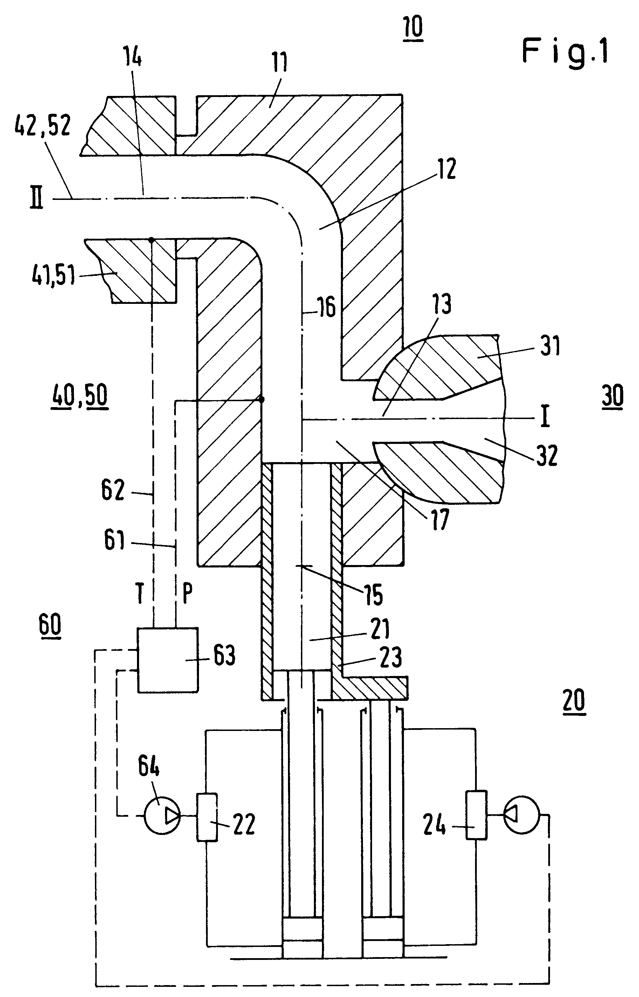

Die Figuren 1 bis 4 zeigen jeweils einen Nachdruckbaustein 10 mit einem Gehäuse 11, in dem ein Zuführkanal 12 eingearbeitet ist. An der Mündung 13 des Nachdruckbausteins 10 ist eine Schnecke 30, an der Mündung 14 ein Formteil 40 oder ggf. eine Heißkanaleinrichtung 50 angeordnet. An der Mündung 15 ist eine Schiebereinrichtung 20 vorgesehen.

Der Zuführkanal 12 ist dabei so ausgestaltet, daß der Schneckenzuführkanal die Mündung 13 aufweist und koaxial zur Schneckenhauptachse geführt ist. Senkrecht zum Schneckenzuführkanal befindet sich ein Kanalteil 16, der koaxial zur Bewegungsachse der Schiebereinrichtung 21 angeordnet ist. Im vorliegenden Fall weist der Schneckenkanalteil 16 eine Biegung um 90 Grad auf, so daß der Kanalteil 16 eine Mittenachse II aufweist, die achsparallel zur Schneckenhauptachse I geführt ist.

Die Schiebereinrichtung 20 besitzt einen Kolben 21, der von einem Kolbenantrieb 22 betätigbar ist.

In den vorliegenden Figuren ist eine Absperrvorrichtung als Hülse 23 ausgeführt, die den Kolben 21 koaxial umgibt und von einem Hülsenantrieb 24 bewegt werden kann.

Die nicht weiter dargestellte Schnecke 30 besitzt eine Düse 31 mit einem Kanal 32.

Von dem ebenfalls nicht weiter dargestellten Formteil 40 ist nur ein Teil eines Gehäuses 41 mit einem Kanal 42 bzw. eine Heißkanaleinrichtung 50 mit einem Gehäuse 51, das einen Kanal 52 besitzt.

An den Nachdruckbaustein sowie die Schiebereinheit ist eine Meß- und Regeleinrichtung 60 anschließbar, die im vorgegebenen Beispiel einen Meßfühler für den Druck 61 bzw. für die Temperatur 62 aufweist und über eine Steuereinheit 63 auf Puppen 64 bzw. 65 auf den Kolben 23 bzw. die Hülse 23 steuerungsmäßig einwirkt.

In der Figur 1 ist die Schiebereinheit 20 geöffnet, d. h. der Kolben 21 ist in seiner Grundstellung und befindet sich in gleicher Höhe wie die Hülse 23, und zwar in der Weise, daß ihre Stirnflächen die Wandung des Schneckenzuführkanals 17 bilden.

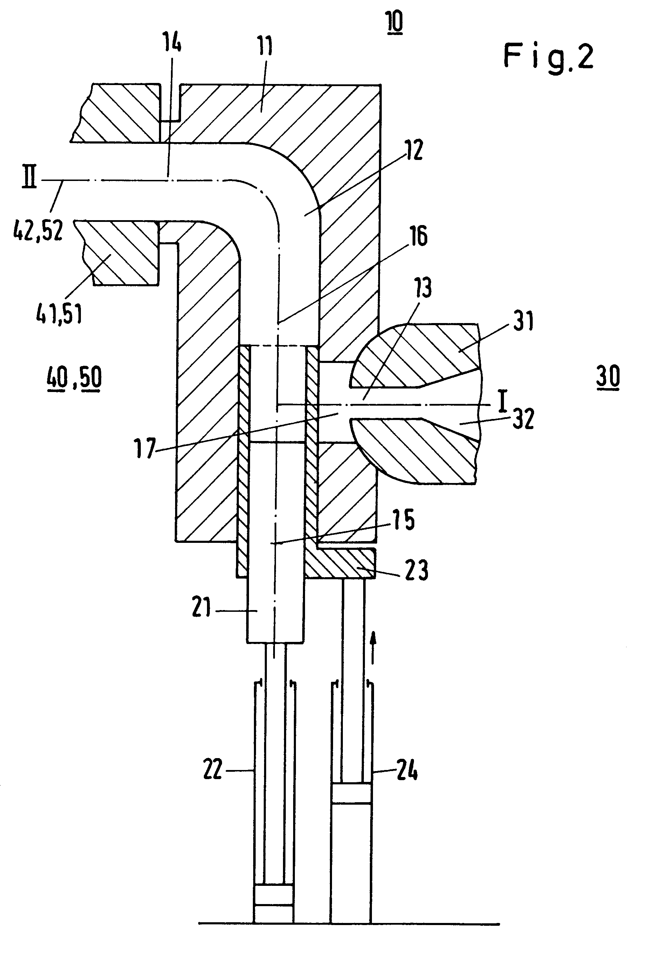

In der Figur 2 wird nach Förderung der Masse durch die Schnecke 30 der Schneckenzuführkanal 17 abgesperrt und der Massestrom unterbrochen.

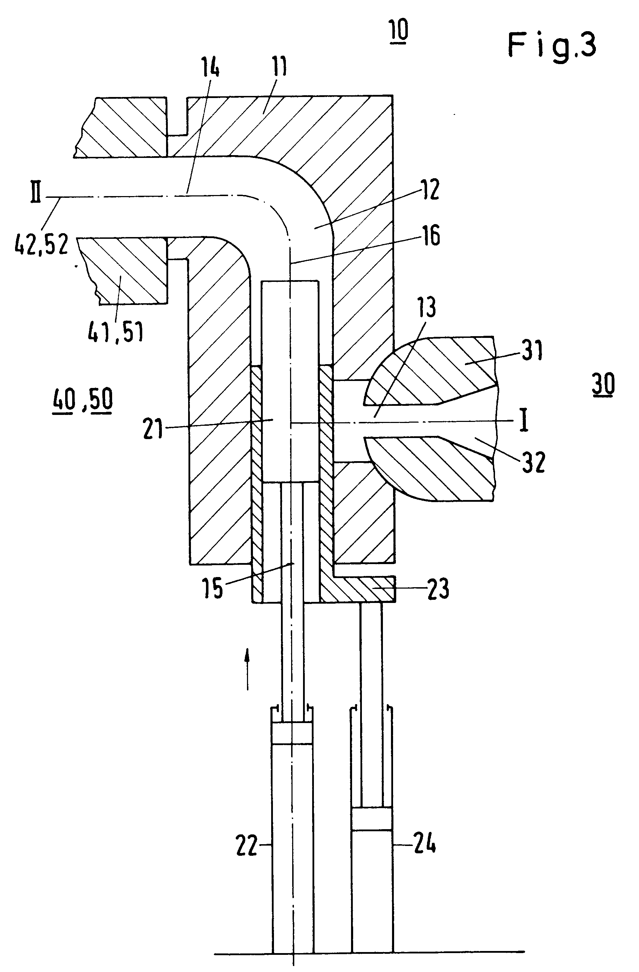

In der Figur 3 ist dargestellt, wie mittels des Kolbens 21 die im Zuführkanal 12 befindliche Masse zur Kavität nachgefördert wird. Die erforderliche Kunststoffmasse kann feinfühlig durch die Kolbenbewegung eingestellt werden.

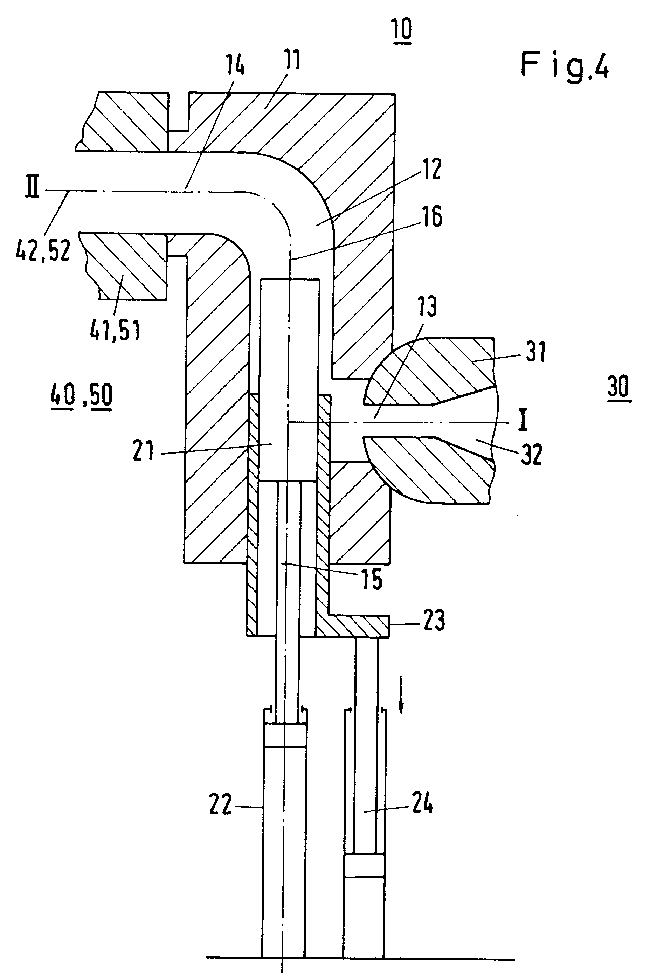

In der Figur 4 wird gezeigt, wie durch vorsichtiges Zurückfahren der Hülse der bis dahin unterbrochenen Massestrom vorsichtig wieder zusammengeführt werden kann. Sobald wieder ein zusammenhängender Massestrom vorliegt, kann der Kolben 21 vollständig zurückgezogen werden, so daß wir wieder in der Ausgangsposition wie in der Figur 2 beim nächsten Spritzzyklus angelangt sind.

### Positionsliste

- 10: Nachdruckbaustein
- 11: Gehäuse
- 12: Zufuhrkanal
- 13: Mündung Schnecke
- 14: Mündung Formteil
- 15: Mündung Schiebeelement
- 16: senkrechter Teil des Kanals
- 17: schneckenseitiger Kanalteil
- 20: Schiebereinrichtung
- 21: Kolben
- 22: Kolbenantrieb
- 23: Hülse
- 24: Hülsenantrieb
- 30: Schnecke
- 31: Düse
- 32: Kanal
- 40: Formteil
- 41: Gehäuse
- 42: Kanal
- 50: Heißkanaleinrichtung
- 51: Gehäuse
- 52: Kanal
- 60: Steuereinheit
- 61: Meßfühler Druck
- 62: Meßfühler Temperatur
- I: Schneckenhauptachse
- II: Zufuhrkanalachse

## Patentansprüche

1. Verfahren zum Nachdrücken von Spritzgießmassen, insbesondere von PET-Massen, in einer eine Spritzgießform mit einer Kavität und eine mit dieser über einen Zufuhrkanal verbundene Schnecke aufweisenden Spritzgießmaschine, die eine mit einem Kolben und einer diesen Kolben umhüllenden Hülse versehene Schiebereinheit zur Erzeugung eines Nachdruckes aufweist, mit folgenden Schritten:
a) Die Masse strömt während der Füllung der Spritzgießform von der Schnecken über den Zufuhrkanal zur Kavität.
b) Am Ende des Füllvorganges wird der Massestrom in der Nähe der Schneckenmündung durch Verschieben der Hülse abgeschnitten.
c) Während der Materialschwindungsphase wird der Volumenverlust durch Nachförderung der im Zufuhrkanal befindlichen Masse durch Verschieben des Kolbens der Schiebereinheit ausgeglichen.
d) Nach Beendigung der Abkühlphase des Spritzgießmaterials wird der zusammenhängende Massestrom des Kunststoffmaterials in der Kavität von dem im Zufuhrkanal getrennt.
e) Bei Anpassung des Massedrucks im Zufuhrkanal an den Massedruck in der Schnecke wird die Absperrung zur Schnecke durch Zurückfahren der Hülse wieder geöffnet und das Material wird einen zusammenhängenden Massefaden bildend zum Zufuhrkanal freigegeben.
f) Der Massestrom zum Zufuhrkanal wird ohne Unterbrechung des Massefadens durch Zurückfahren des Kolbens der Schiebereinheit wieder freigegeben für den ungehinderten Einspritzvorgang.

2. Vorrichtung zur Durchführung des Verfahrens nach Anspruch 1, bei der eine Schnecke (30) über eine einen Zufuhrkanal (12) aufweisenden Nachdruckbaustein (10) mit einem Spritzgießformteil (40) in Verbindung steht, wobei der mit der Schnecke (30) in Verbindung stehende Teil (17) des Zufuhrkanals (12) des Nachdruckbausteins (10) in einen senkrecht zu diesem angeordneten Kanalteil (16) mündet, in dem eine Schiebereinheit (20) vorgesehen ist, die zwei unabhängig voneinander verschiebbare Bauteile (21, 23) aufweist, die separat angetrieben werden und als Kolben (21) und messerförmiges Absperrteil (23) ausgebildet sind.

3. Vorrichtung nach Anspruch 2,
dadurch gekennzeichnet,
daß das messerförmige Absperrteil (23) eine den Kolben (21) umhüllende Hülse ist.

4. Vorrichtung nach Anspruch 2 oder 3,
dadurch gekennzeichnet,
daß der Antrieb (22) des Kolbens (21) und der Antrieb (24) des messerförmigen Absperrteils (23) mit einer Steuereinheit (60) verbunden sind, an die Meßelemente zur Erfassung des Drucks (61) und der Temperatur (62) angeschlossen sind.

## Claims

1. A method for the application of holding pressure to injection-moulding compounds, in particular PET compounds, in an injection-moulding machine having an injection mould with a cavity and a screw connected thereto via a feed channel, which machine has a pusher unit provided with a piston and a sleeve surrounding this piston for producing a holding pressure, comprising the following steps:
a) the compound during the filling of the injection-moulding machine flows from the screw via the feed channel to the cavity;
b) at the end of the filling operation, the flow of compound is cut off in the vicinity of the screw mouth by displacing the sleeve;
c) during the material shrinkage phase, the volume loss is compensated by subsequently supplying the compound located in the feed channel by displacing the piston of the pusher unit;
d) once the cooling phase of the injection-moulding material has ended, the coherent melt throughput of the plastics material in the cavity is separated from that in the feed channel;
e) when adapting the melt pressure in the feed channel to the melt pressure in the screw, the shutoff means to the screw is reopened by retracting the sleeve, and the material, forming a coherent melt thread, is released to the feed channel;
f) the melt throughput to the feed channel is unblocked again for the unhindered injection operation without interrupting the melt thread by retracting the piston of the pusher unit.

2. An apparatus for performing the method according to Claim 1, in which a worm (30) is connected via a holding-pressure component (10) which has a feed channel (12) to an injection-mould part (40), the part (17) of the feed channel (12) of the holding-pressure component (10) which is connected to the screw (30) opening into a channel part (16) arranged at right-angles thereto, in which a pusher unit (20) is provided which has two components (21, 23) which can be displaced independently of one another, which are driven separately and are designed as a piston (21) and a knife-like shutoff part (23).

3. An apparatus according to Claim 2, characterized in that the knife-like shutoff part (23) is a sleeve which surrounds the piston (21).

4. An apparatus according to Claim 2 or 3, characterised in that the drive (22) for the piston (21) and the drive (24) for the knife-like shutoff part (23) are connected to a control unit (60) to which measuring elements for detecting the pressure (61) and the temperature (62) are connected.

## Revendications

1. Procédé pour le maintien en pression de matières coulées par injection, en particulier de matières PET, dans une machine de coulée par injection présentant un moule de coulée par injection avec une cavité et une vis sans fin reliée à celui-ci par l'intermédiaire d'un canal d'amenée, machine qui présente une unité de coulisseau munie d'un piston et d'un manchon entourant ce piston, pour engendrer un maintien en pression, comportant les étapes suivantes :
a) la matière s'écoule pendant le remplissage du moule de coulée par injection par les vis sans fin par l'intermédiaire du canal d'amenée vers la cavité,
b) à la fin du processus de remplissage, le courant de matière est interrompu à proximité de l'embouchure des vis sans fin par déplacement du manchon,
c) pendant la phase de retrait de matière, la perte de volume est compensée par amenée de la matière se trouvant dans le canal d'amenée par déplacement du piston de l'unité de coulisseau,
d) après achèvement de la phase de refroidissement de la matière de coulée par injection, le courant de matière continu de la matière synthétique dans la cavité est séparé de celui dans le canal d'amenée,
e) lors de l'adaptation de la pression de matière dans le canal d'amenée à la pression de matière dans la vis sans fin, l'obturation vers la vis sans fin est à nouveau ouverte en ramenant le manchon et la matière est libérée vers le canal d'amenée en formant un brin de matière continu,
f) le courant de matière vers le canal d'amenée est à nouveau libéré sans interruption du brin de matière en ramenant le piston de l'unité de coulisseau pour un processus d'injection non gêné.

2. Dispositif pour la mise en oeuvre du procédé selon la revendication 1, dans lequel une vis sans fin (30) est reliée, par l'intermédiaire d'un élément de maintien en pression (10) présentant un canal d'amenée (12), à une partie de moule de coulée par injection (40), la partie (17), reliée à la vis sans fin (30), du canal d'amenée (12) de l'élément de maintien en pression (10) débouchant dans une partie de canal (16) agencée perpendiculairement à celui-ci, dans laquelle il est prévu une unité de coulisseau (20) qui présente deux pièces (21,23) déplaçables indépendamment l'une de l'autre, qui sont entraînées de façon séparée et sont réalisées comme piston (21) et partie de retenue (23) du type lame.

3. Dispositif selon la revendication 2,
caractérisé en ce que la partie de retenue (23) du type lame est un manchon entourant le piston (21).

4. Dispositif selon la revendication 2 ou 3,
caractérisé en ce que l'entraînement (22) du piston (21) et l'entraînement (24) de la partie de retenue (23) du type lame sont reliés à une unité de commande (60), a laquelle sont raccordés des éléments de mesure pour déterminer la pression (61) et la température (62).
